(19) Europäisches Patentamt
European Patent Office
Office européen des brevets

(11) EP 0 635 968 B1

(12) **EUROPÄISCHE PATENTSCHRIFT**

(45) Veröffentlichungstag und Bekanntmachung des Hinweises auf die Patenterteilung:
28.10.1998 Patentblatt 1998/44

(51) Int Cl.6: **H04N 1/393**, H04N 1/10

(21) Anmeldenummer: 94116459.2

(22) Anmeldetag: 06.07.1990

(54) **Vorrichtung zum Umwandeln von Lichtsignalen in Videosignale**

Device for converting light signals to video signals

Convertisseur de signaux lumineux en signaux vidéo

(84) Benannte Vertragsstaaten:
DE FR GB

(30) Priorität: 08.07.1989 DE 3922512

(43) Veröffentlichungstag der Anmeldung:
25.01.1995 Patentblatt 1995/04

(62) Dokumentnummer(n) der früheren Anmeldung(en) nach Art. 76 EPÜ:
90910706.2 / 0 482 047

(73) Patentinhaber:
• **EASTMAN KODAK COMPANY**
  **Rochester, New York 14650 (US)**
• **KODAK AKTIENGESELLSCHAFT**
  **D-70323 Stuttgart (DE)**

(72) Erfinder:
• **Mutze, Ulrich, Dr.**
  **D-7000 Stuttgart 60 (DE)**
• **Renner, Meinrad**
  **D-70323 Stuttgart (DE)**

(74) Vertreter: **Schmidt, Peter, Dipl.-Ing. et al**
**KODAK Aktiengesellschaft**
**Patentabteilung**
**70323 Stuttgart (DE)**

(56) Entgegenhaltungen:
WO-A-89/10036          DE-A- 3 605 322
DE-C- 3 630 739        US-A- 4 580 172
US-A- 4 633 306

• **PATENT ABSTRACTS OF JAPAN vol. 6, no. 34 (P-104) (912) 2. März 1982 & JP-A-56 153 314 (RICOH) 27. November 1981**

**Beschreibung**

Die Erfindung betrifft eine Vorrichtung zum Umwandeln der Lichtsignale eines an einem Gegenstandsträger befindlichen flachen Gegenstandes, der sich im wesentlichen in einer Dingebene erstreckt, z.B. eines Diapositives oder eines Dia-negatives, in Videosignale.

Vorrichtungen dieser Art mit einem Gehäuse, einem ersten Träger für den Gegenstand, einem zweiten Träger für einen CCD-Sensor, der den gewünschten Ausschnitt punktweise abtastet und in Videosignale umwandelt, und einer ein Objektiv aufweisenden optischen Einrichtung, die zur Abbildung des gewünschten Ausschnittes auf dem CCD-Sensor einstellbar ist und eine optische Achse definiert, sind z.B. bekannt durch den Kodak SV 500 Videotransfer Stand (Zeitschrift foto-contact 11/87, Seite 19) und den Fotovix film/video-processor der Firma Tamron, der im Aufsatz "Slides on the move" in der Zeitschrift Industrial Photography, Februar 1988, Seite 31, beschrieben ist. Bei diesen bekannten. Vorrichtungen wird als Objektiv ein Zoom-Objektiv benutzt, um zur Abbildung von verschieden großen Ausschnitten des Gegenstandes diesen verschieden vergrößern zu können.

DE-36 30 739 offenbart ein Verfahren und eine Vorrichtung, bei dem/der zur Datenaufnahme mittels Detektorarray eine gezielte Ortsveränderung zwischen Objekt und Array statffindet, wodurch eine höhere Auflösung von Objekten erfolgt, so daß sich Signalverbesserungen durch Mittelung, Farbkameras oder hochauflösende Strukturen realisieren lassen.

Der Erfindung liegt die Aufgabe zugrunde, eine Vorrichtung mit möglichst hoher Bildauflösung und geringem Kostenaufwand zu schaffen.

Diese Aufgabe der Erfindung ist bei einer Vorrichtung der eingangs genannten Art durch die Merkmale des gekennzeichneten Teil des Anspruchs 1 gelöst.

Eine längs der optischen Achse unverschiebbare Anordnung des CCD-Sensors ist hierbei besonders vorteilhaft, wenn im Strahlengang unmittelbar vor der Sensorfläche Zusatzeinrichtungen vorhanden sind, die dazu dienen, die auf die Sensorfläche treffenden Lichtstrahlen zu beeinflussen. Bei diesen Einrichtungen kann es sich um einen Strahlversetzer handeln, der es ermöglicht, eine gesteuerte Strahlversetzung längs der Ebene der Sensorfläche zu bewirken. Bei einem CCD-Sensor, bei dem die Lücken zwischen aneinander angrenzenden Pixeln Empfindlichkeitssenken darstellen, ergibt sich dadurch die Möglichkeit, beim Aufbau des die Bildinformation des Gegenstandes wiedergebenden Videosignals schrittweise so vorzugehen, daß Lichtstrahlen, die ein und derselben Bildinformation entsprechen, durch Strahlversetzung auf verschiedenen Stellen der Sensorfläche auftreffen, so daß auch diejenige Bildinformation zur Signalerzeugung verwendet werden kann, die ohne Strahlversetzung auf eine Lücke zwischen Pixeln auftreffen würde.

Als Strahlversetzer können planparallele optische Platten vorgesehen sein, die unterschiedliche Neigungen relativ zur optischen Achse besitzen und wahlweise in den Strahlengang einführbar sind. Die planparallelen Platten können an einem Halter in Form eines Rades angebracht sein, wobei die planparallelen Platten in konzentrisch zur Drehachse des Rades gelegenen Ausschnitten gehalten sind. Durch Drehen des Rades mittels eines Stellantriebes können gewünschte planparallele Platten im Strahlengang zur Wirkung gebracht werden.

Als dem CCD-Sensor im Strahlengang vorgeschaltete Zusatzeinrichtung kann auch ein Farbfilterrad vorhanden sein, das es in üblicher Weise ermöglicht, mittels eines schwarz-weiß empfindlichen CCD-Sensors Farb-Videosignale zu erzeugen, indem die Farbinformation des Gegenstandes schrittweise unter Einschalten verschiedener Farbfilter in den Strahlengang abgetastet wird.

Die Vorrichtung gemäß der Erfindung ist für jede Art von Gegenständen und insbesondere auch für nicht durchscheinende Bilder verwendbar, die mit der optischen Einrichtung auf einer Sensorfläche des CCD-Sensors abbildbar sind.

Die Erfindung ist in der folgenden Beschreibung von in den Zeichnungen schematisch vereinfacht dargestellten Ausführungsbeispielen im einzelnen erläutert.

Es zeigen:

Fig. 1        einen vertikalen Längsschnitt nach der Linie I - I in Fig.2 eines das Prinzip der Erfindung darstellenden, nur gedachten ersten Ausführungsbeispiels;

Fig. 2        einen Schnitt nach der Linie II - II in Fig.1;

Fig. 3 und 4        schematisch stark vereinfacht und längs vertikaler Schnittebenen aufgeschnitten gezeichnete Seitenansichten von zwei weiteren Ausführungsbeispielen.

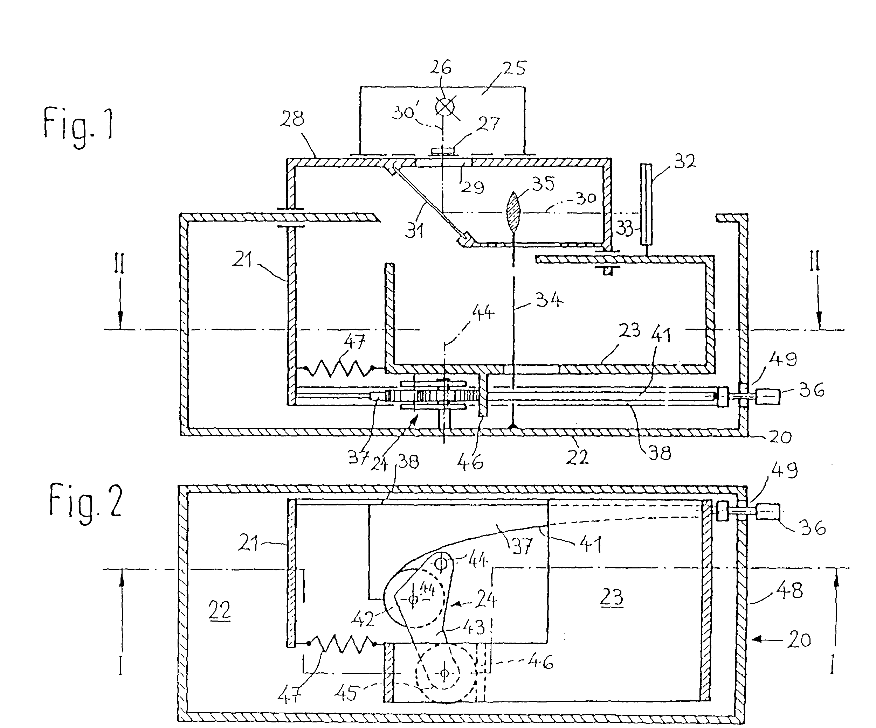

Die Prinzipdarstellung nach den Fig.1 und 2 eines gedachten Ausführungsbeispiels einer Vorrichtung zum Umwandeln der Lichtsignale von gewünschten Ausschnitten eines flachen Gegenstandes, z.B. eines Dias, in Videosignale weist ein Gehäuse 20 auf, innerhalb dessen ein als Gegenstandsträger dienender Gegenstandswagen 21 in der Zeichenebene und parallel zum Boden 22 des Gehäuses 20, also in Längsrichtung des Gehäuses, verschiebbar gelagert ist. In der gleichen Verschieberichtung verschiebbar ist ein Bildwagen 23 relativ zum Gegenstandswagen 21 verschiebbar mit diesem verbunden. Zwischen beiden Wagen ist ein als Ganzes mit 24 bezeichnetes Getriebe vorgesehen.

Auf dem Gegenstandswagen 21 ist eine bauliche Einheit 25 angeordnet.

Diese ist auf dem Gegenstandswagen in zwei zueinander senkrechten waagerechten Richtungen verschiebbar und um eine vertikale, zum Boden 22 senkrechte Achse drehbar, mit dem Gegenstandswagen 21 verbunden. In der baulichen Einheit 25 befindet sich eine Lampe 26 und ein Halter 27 für ein den abzubildenden Gegenstand tragendes Diapositiv (im folgenden kurz "Dia" genannt). In der oberen Wandung 28 des Gegenstandswagens 21 befindet sich eine Öffnung 29. Unter der Öffnung 29 ist ein Spiegel 31 im Gegenstandswagen 21 fest angeordnet, dessen zur Zeichenebene senkrechte Spiegelebene unter einem Winkel von 45o gegenüber der Vertikalen geneigt ist. Auf dem Bildwagen 23 ist ein CCD-Sensor 32 so angeordnet, daß das Licht der Lampe 26, nachdem es das im Halter 27 angeordnete Dia passiert und vom Spiegel 31 reflektiert worden ist, auf die Sensorfläche 33 fällt. Auf dem Wege dieses Lichtstrahlenbündels vom Spiegel 31 zur Sensorfläche 33 ist auf einem Träger 34 ein Objektiv 35 angeordnet, das eine waagerechte optische Achse 30 definiert, die durch den Spiegel 31 in einer vertikalen Umlenkung 30' fortgesetzt ist. Der Träger 34 ist fest mit dem Gehäuse 20 verbunden.

Das den Gegenstandswagen 21 mit dem Bildwagen 23 verbindende Getriebe 24 weist eine Kurvenleiste 37 auf, die in einer Schwalbenschwanz-Führungsleiste 38 des Gegenstandswagens 21 parallel zur Zeichenebene in Fig.2 verschiebbar mit dem Gegenstandswagen 21 verbunden ist. Zum Verschieben der Kurvenleiste 37 relativ zum Gegenstandswagen 21 und damit zum Scharfeinstellen der optischen Einrichtung ist eine Rändelschraube 36 vorgesehen.

Die Kurvenleiste 37 ist mit einer Kurve 41 versehen, an der eine Tastrolle 42 anliegt, die an einem Hebel 43 drehbar gelagert ist, der um eine am Gehäuseboden 22 fest angeordnete Achse 44 schwenkbar ist und an seinem äußersten Ende eine zweite Tastrolle 45 trägt, die ebenfalls drehbar am Hebel 43 gelagert ist.

Die zweite Tastrolle 45 liegt an einem unteren Vorsprung 46 des Bildwagens 23 an. Dieser ist mit dem Gegenstandswagen 21 mittels einer Zugfeder 47 verbunden, durch die der Vorsprung 46 an die zweite Tastrolle 45 und die Kurve 41 in entgegengesetzter Richtung an die erste Tastrolle 42 gedrückt werden. Dadurch bestimmt das Getriebe 24 die relative Stellung des Gegenstandswagens 21 zum Bildwagen 23. Wird nämlich der Gegenstandswagen 21 horizontal in der Zeichenebene der Fig.1 nach links bewegt, dann folgt die Tastrolle 42 der Kurve 41 und schwenkt den Hebel 43 im Uhrzeigersinn, so daß durch die Kraft der Feder 47 der Bildwagen 23 dieser Schwenkbewegung des Hebels folgt. Durch diese aus der Darstellung in den Fig.1 und 2 nach links gerichtete Bewegung des Gegenstandswagens 21 wird die Gegenstandsweite oder der Gegenstandsabstand g des im Halter 27 gehaltenen Dias von der entsprechenden Hauptebene des Objektivs 35 vergrößert und gleichzeitig die Bildweite oder der Bildabstand b der Sensorfläche 33 von der entsprechenden Hauptebene des Objektivs 35 verringert. Die Kurve 41 ist dabei so ausgelegt, daß z.B. bei einer auf beiden Seiten gleichen Brennweite f des Objektivs 35 das Abbildungsgesetz

$$1/b + 1/g = 1/f$$

erfüllt ist.

Wie aus Fig.2 ersichtlich ist, ist für die Schraube 36 in der rechten Endwand 48 des Gehäuses 20 eine Aussparung 49 vorgesehen, aus der die Schraube 36 ganz heraustritt, wenn sich der Gegenstandswagen 21 in seiner in den Fig.1 und 2 äußerst rechten Stellung befindet, in der der Gegenstandsabstand $g_{min}$ den kleinsten Wert hat. In dieser Stellung wird die größte Vergrößerung des Bildes des Dias in der Ebene der Sensorfläche 33 abgebildet. In dieser Stellung kann durch Drehen der Schraube 36 das vom CCD-Sensor auf einem Monitor erzeugte Bild scharf eingestellt werden. Diese Scharfeinstellung ist insbesondere deswegen notwendig, weil die Vorrichtung sowohl für verglaste als auch nicht verglaste Dias verwendbar sein soll.

Durch die Schraube 36 kann die durch die Dicke des Glases bedingte Änderung des Gegenstandsabstandes berücksichtigt werden.

Aus der oben angegebenen Abbildungsgleichung ergibt sich die Abhängigkeit des Bildabstandes vom Gegenstandsabstand für den Fall, daß die Brennweite f als Längeneinheit gewählt wird, zu

$$b = g / (g - 1).$$

Der Vergrößerungsfaktor der oben beschriebenen optischen Einrichtung ergibt sich zu

lineare Bildabmessung /

I lineare Gegenstandsabmessung = $b/g = \beta$.

Die Sensorflächenhöhe beträgt 1/6 von der Diahöhe. Nimmt man die Brennweite des Objektivs f = 1 als Längeneinheit, dann wird ein Dia auf der ganzen Sensorfläche bei einem Gegenstandsabstand g = 7 abgebildet, denn es ergibt sich dann ein Bildabstand von b = 7/6, demnach ein Vergrößerungsfaktor $\beta = 1/6$.

Auf dem vom Sensor gesteuerten Monitor erscheint dann das volle Diabild. Diese Darstellung wird im folgenden als Vergrößerung 1:1 mit einem Vergrößerungsfaktor Gamma = 6 x $\beta$ bezeichnet.

Die folgende Tabelle gibt den Bildabstand b und die Vergrößerung Gamma in Abhängigkeit vom Gegenstandsabstand g bei f = 1 an:

| g | b | Gamma |
|---|---|---|
| 1,5 | 3 | 12 |
| 2 | 2 | 6 |
| 3 | 3/2=1,5 | 3 |
| 4 | 4/3=1,33 | 2 |
| 5 | 5/4=1,25 | 1,5 |
| 6 | 6/5=1,2 | 1,2 |
| 7 | 7/6=1,17 | 1 |

Die Betriebsweise der oben beschriebenen gedachten Ausführungsform ist denkbar einfach. Nachdem die Scharfeinstellung mit dem kleinsten Gegenstandsabstand $g_{min}$ eingestellt worden ist, wird der Gegenstandswagen 21 nach links bewegt, bis zu der Vergrößerung Gamma = 1. Jetzt wird die bauliche Einheit 25 so verschoben und gedreht, daß sich der gewünschte Ausschnitt in der Mitte des Bildschirmes des Monitors befindet.

Dann wird der Gegenstandswagen in der Darstellung nach den Fig. 1 und 2 nach rechts verschoben und dadurch der Gegenstandsabstand verringert, bis der ganze gewünschte Ausschnitt vergrößert den ganzen Bildschirm des Monitors ausfüllt.

Bei dem dargestellten Ausführungsbeispiel ist das Objektiv 35 mit dem Gehäuse 20 fest verbunden. Zum Einstellen der verschiedenen Vergrößerungen sind der Gegenstandswagen 21 und der Bildwagen 23 relativ zueinander immer so verstellbar, daß der gewünschte Ausschnitt des Dias scharf auf der Sensorfläche 33 abgebildet wird. Die der Erfindung zu Grunde liegende Idee kann jedoch auch dadurch verwirklicht werden, daß der Gegenstand, z.B. das Dia, und/oder die Sensorfläche 33 gegenüber dem Gehäuse 20 fest angeordnet sind und andere längs der optischen Achse einstellbare Elemente nach der bekannten mathematischen Beziehung durch ein Getriebe miteinander verbunden sind.

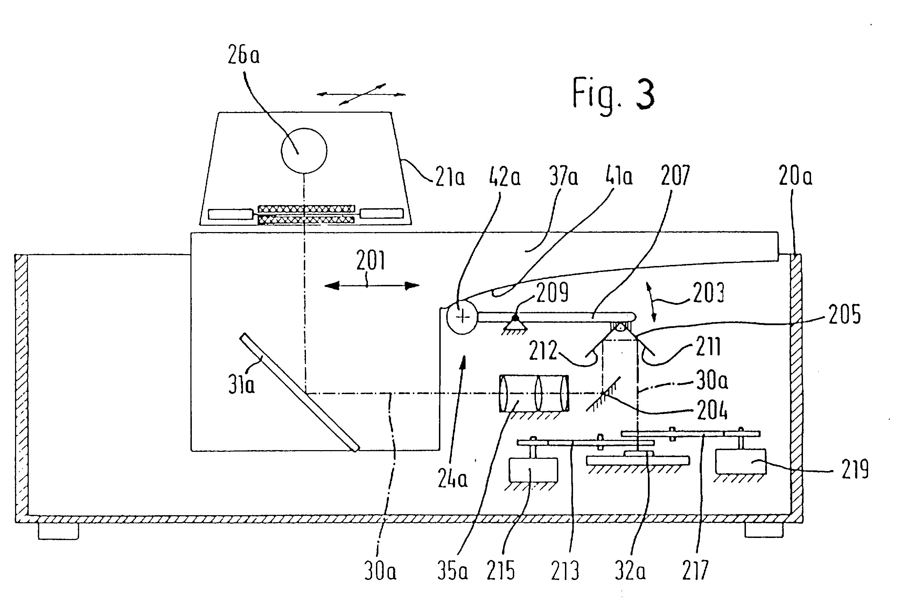

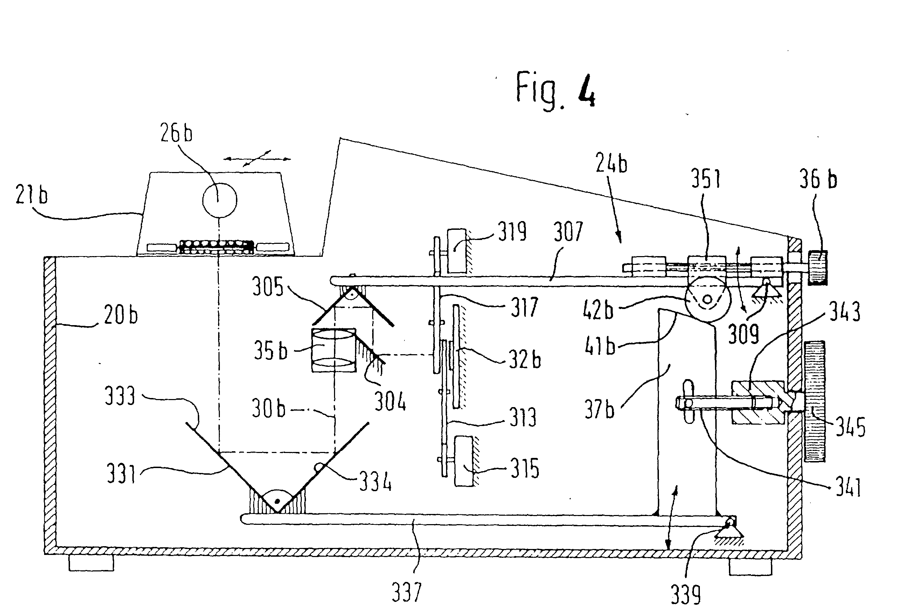

Zwei Beispiele derartiger Ausführungsformen sind in den Fig. 3 und 4 gezeigt. Diese sind zur Verdeutlichung des Funktionsprinzips, stark schematisch vereinfacht gezeichnete Darstellungen, in denen Einzelheiten, die im handwerklichen Können des Fachmanns liegen, der Übersichtlichkeit wegen weggelassen sind. Diejenigen Teile, die solchen des in Fig. 1 und 2 dargestellten Ausführungsbeispiels in ihrer Funktion entsprechen, sind mit den gleichen, jedoch mit a bzw. b versehenen Bezugszahlen bezeichnet, so daß durch diesen Hinweis über die Bezugszahlen bei der Beschreibung der folgenden Ausführungsbeispiele auf die Beschreibung des erstbeschriebenen Ausführungsbeispiels Bezug genommen wird, um unnötige Wiederholungen zu vermeiden.

Bei dem Beispiel nach Fig. 3 ist der Gegenstandswagen 21a in gleicher Weise relativ zum Gehäuse 20a längsbeweglich wie der Gegenstandswagen 21 des erstbeschriebenen Beispiels. Wie bei den zuvor beschriebenen Beispielen ist auch eine die Drehung des Gegenstandsträgers ermöglichende Einrichtung (Drehscheibe) vorhanden.

Bei der in Längsrichtung erfolgenden Verschiebung des Gegenstandswagens 21a erfolgt die Mitnahme der Kurvenleiste 37a in deren Führungsrichtung, die mit einem Doppelpfeil 201 angegeben ist. Bei dieser Bewegung von Gegenstandswagen 21a und Kurvenleiste 37a relativ zum Gehäuse 20a und relativ zu dem fest angebrachten Objektiv 35a ergibt sich eine Änderung der Gegenstandsweite. Die entsprechende Anpassung der Bildweite mit Hilfe des Getriebes 24a erfolgt durch einen Dachspiegel 205, der im Strahlengang zwischen Objektiv 35a und einem dem CCD-Sensor 32a vorgeschalteten festen Umlenkspiegel 204 angeordnet und mittels des Getriebes 24a in Richtung eines Doppelpfeils 203 verstellbar ist. Der Dachspiegel 205 ist am Endbereich eines zweiarmigen Schwenkhebels 207 fest angebracht, der am Gehäuse 20a bei 209 schwenkbar gelagert ist und an seinem dem Dachspiegel 205 entgegengesetzten Endbereich eine drehbare Tastrolle 42a trägt, die durch Gewichtskrafteinfluß des wesentlich länger ausgebildeten, den Dachspiegel 205 tragenden anderen Hebelarms an die Führungskurve 41a der Kurvenleiste 37a angedrückt ist. Beim Ablaufen der Tastrolle 42a an der Führungskurve 41a ergibt sich die erwähnte Lageeinstellung des Dachspiegels 205 in Richtung des Doppelpfeils 203, wodurch eine entsprechende Änderung der Bildweite bewirkt wird.

Trotz der verhältnismäßig großen Länge des den Dachspiegel 205 tragenden Hebelarms des Hebels 207 erfolgt die Lageverstellung des Dachspiegels 205 nicht geradlinig längs der optischen Achse 30a sondern leicht bogenförmig. Da beide zusammenwirkenden reflektierenden Flächen 211 und 212 des Dachspiegels 205 miteinander einen rechten Winkel einschließen, führt die geringfügige Schwenkbewegung des Dachspiegels 205 nicht zu einer Änderung der Winkellage der optischen Achse 30a sondern lediglich zu einer geringfügigen seitlichen Strahlenversetzung, also zu einer Lageversetzung des auf dem Sensor 32a abgebildeten Ausschnittes des Gegenstandes. Dies kann erforderlichenfalls durch eine die Ausschnittsveränderung bewirkende Verstellung des Gegenstandswagens 21a kompensiert werden.

Wie bei dem erstbeschriebenen Ausführungsbeispiel, wo mittels der Schraube 36 eine relative Lageverstellung zwischen Kurvenleiste 37 und Gegenstandswagen 21 zur Scharfeinstellung vorhanden ist, sind auch bei dem Beispiel von Fig. 3 nicht gezeigte Einstellmittel für diesen Zweck vorhanden.

Wie erwähnt, besteht bei Fig. 3 der grundlegende Unterschied zum erstbeschriebenen Beispiel darin, daß der CCD-Sensor 32a fest mit dem Gehäuse 20a verbunden ist. Die feste Anordnung ist besonders günstig, wenn dem Sensor 32a Zusatzeinrichtungen optisch vorgeschaltet sind. Beim gezeigten Beispiel handelt es sich hierbei um eine drehbar gelagerte Farbfilterscheibe 213, die mittels eines Stellmotors 215 drehbar ist, um nacheinander gewünschte Farbfilterbereiche der Farbfilterscheibe 213 auf die optische Achse 30a auszurichten. In bekannter Weise läßt sich dadurch bei Verwendung eines schwarz-weiß empfindlichen Sensors 32a ein Farb-Videosignal erzeugen.

Als weitere Zusatzeinrichtung ist ein in ähnlicher Weise wie die Farbfilterscheibe 213 drehbar gelagertes Rad 217 vorgesehen, das durch einen Stellmotor 219 in Schritten drehbar ist. Das Rad 217 weist in konzentrisch zu seiner Drehachse gelegenen Ausschnitten planparallele optische Platten auf, von denen je eine gewünschte planparallele Platte auf die optische Achse 30a ausrichtbar ist. Die planparallelen Platten weisen relativ zur optischen Achse 30a unterschiedliche Neigungen auf. Dadurch bildet das Rad 217 mit den planparallelen Platten einen steuerbaren optischen Strahlversetzer. Mit dessen Hilfe ist es möglich, das Videosignal in mehreren Schritten aufzubauen, wobei durch Wahl der Drehstellung des Rades 217 bei jedem Schritt eine Strahlversetzung in der Weise vorgenommen wird, daß Bildinformationen die ohne Strahlversetzung in die unwirksamen Lücken zwischen aneinandergrenzenden Pixeln des Sensors 32a fallen würden, auf den empfindlichen Bereich der betreffenden Pixel auftreffen und daher für die Bildsignalerzeugung nicht verlorengehen.

Das Beispiel nach Fig. 4 sieht, ebenso wie das Beispiel nach Fig. 3, eine feste Anordnung des CCD-Sensors 32b relativ zum Gehäuse 20b vor. Dem Sensor 32b sind auch die gleichen Zustzeinrichtungen, wie sie zuvor beschrieben wurden, optisch vorgeschaltet, nämlich ein Farbfilterrad 313 mit einem Stellmotor 315 und ein Rad 317, das als Strahlversetzer dient und planparallele optische Platten trägt, wobei das Rad 317 durch einen Stellmotor 319 schrittweise drehbar ist.

Wie bei dem Beispiel nach Fig. 3 ist im Strahlengang zwischen Objektiv 35b und einem dem Sensor 32b vorgeschalteten festen Umlenkspiegel 304 ein Dachspiegel 305 als mittels des Getriebes 24b längs der optischen Achse 30b einstellbares Element vorhanden. Der Dachspiegel 305 befindet sich an dem Endbereich eines hier einarmigen, um ein Lager 309 schwenkbaren Schwenkhebels 307, der über eine durch Gewichtskrafteinfluß des Hebels 307 an einer Führungskurve 41b einer Führungsleiste 37b geführte Tastrolle 42b lageverstellbar ist, so daß der Dachspiegel 305 zur Bildweitenänderung mittels des von der Tastrolle 42b und der Führungskurve 41b gebildeten Getriebes 24b einstellbar ist.

Im Unterschied zum Beispiel gemäß Fig. 3 erfolgt die Bewegung der Kurvenleiste 37b nicht durch Längsverschieben des Gegenstandswagens 21b, sondern dieser ist mit der Kurvenleiste 37b nicht gekoppelt. Der Gegenstandwagen 21b bildet bei dieser Ausführungsform daher auch kein längs der optischen Achse 30b einstellbares Element zur Änderung der Gegenstandsweite. Zu diesem Zweck ist vielmehr ein zweiter Dachspiegel 331 vorhanden, der zwei einen rechten Winkel miteinander einschließende reflektierende Flächen 333 und 334 aufweist und am Endbereich eines zweiten Schwenkhebels 337 fest angebracht ist. Die Bewegung des zweiten Dachspiegels 331 zur Einstellung der Gegenstandweite erfolgt durch Verändern der Schwenkstellung des Schwenkhebels 337 um sein Schwenklager 339 mit Hilfe einer Gewindespindel 341, die an der Kurvenleiste 37b angelenkt ist, welche ihrerseits mit dem Hebel 337 fest verbunden ist. Die Gewindespindel 341 ist mit einer Stellmutter 343 in Gewindeeingriff, die mittels eines Handknopfes 345 drehbar ist.

Bei der Schwenkbewegung der Kurvenleiste 37b um das Schwenklager 339 läuft die Tastrolle 42b an der Führungskurve 41b ab, wodurch der Dachspiegel 305 eine zur Bewegung des zweiten Dachspiegels 331 so in Bezug stehende Bewegung durchführt, daß der Abbildungsgleichung genüge geleistet wird. Um eine relative Lageverstellung zwischen Dachspiegel 305 und zweitem Dachspiegel 331 zum Zwecke einer Scharfstellung zu ermöglichen, ist die Tastrolle 42b mit dem Schwenkhebel 307 nicht fest verbunden, sondern an einem Lagerbock 351 gelagert, der längs des Hebels 307 mit Hilfe einer Einstellschraube 36b verstellbar ist, die funktionsmäßig der Schraube 36 von Fig. 1 und 2 entspricht.

Durch eine im handwerklichen Können des Fachmanns liegende Beleuchtung eines undurchsichtigen Bildes anstelle eines Dias kann das Bild in ähnlicher Weise auf dem CCD-Sensor abgebildet werden.

Die vorstehende Beschreibung und die Zeichnung beschränken sich nur auf die Angabe von Merkmalen, die für die beispielsweise Verkörperung der Erfindung wesentlich sind.

## Patentansprüche

1. Vorrichtung zum Umwandeln der Lichtsignale eines an einem Gegenstandsträger (21;21a;21b) befindlichen flachen Gegenstandes, der sich im wesentlichen in einer Dingebene erstreckt, in Videosignale mittels eines an einem Träger angeordneten CCD-Sensors (32;32a;32b) und einer ein Objektiv (35,35a,35b) aufweisenden optischen Einrichtung, die einen Strahlengang mit einer optischen Achse (30;30a;30b) definiert und zur Abbildung des Gegenstandes auf dem CCD-Sensor (32;32a:32b) einstellbar ist, **dadurch gekennzeichnet,** daß

die optische Einrichtung einen steuerbaren Strahlversetzer (217,219;317,319) aufweist, der mittels eines Stellantriebes (219;319) für eine wahlweise planparallele Versetzung der auf den CCD-Sensor (32a; 32b) treffenden Lichtstrahlen längs der Ebene seiner Sensorfläche einführbar ist, so daß Bildinformationen, die ohne Lichtstrahlversetzung in unwirksame Lücken zwischen aneinandergrenzenden empfindlichen Sensorflächen des CCD-Sensors fallen würden, auf empfindliche Sensorflächen des Sensors auftreffen.

**2.** Vorrichtung nach Anspruch 1, dadurch gekennzeichnet, daß der Strahlenversetzer (217; 317) mindestens eine zur Richtung des Strahlengangs geneigt angeordnete, planparallele optische Platte aufweist.

**3.** Vorrichtung nach Anspruch 2, dadurch gekennzeichnet, daß der Strahlenversetzer (217; 317) mehrere in unterschiedlichem Winkel und/oder Neigungssinn zur Richtung des Strahlengangs geneigte planparallele Platten aufweist, von denen je eine beliebige durch Bewegen des Strahlenversetzers mittels des Stellantriebes (219;319) auswählbar ist.

**4.** Vorrichtung nach Anspruch 3, dadurch gekennzeichnet, daß der Strahlenversetzer (217; 317) als ein Rad ausgebildet ist, das die planparallelen Platten in konzentrisch zu seiner Drehachse gelegenen Ausschnitten trägt und mittels des Stellantriebes in gewünschte Drehstellungen drehbar ist.

**Claims**

**1.** Device for converting into video signals the light signals of a flat object which is provided on an object carrier (21; 21a; 21b) and extends substantially in an object plane, by means of a CCD sensor (32; 32a; 32b) arranged on a carrier and by means of an optical system comprising a lens unit (35; 35a; 35b), said unit defining a raypath with an optical axis (30; 30a; 30b) and being adjustable for imaging the object on the CCD sensor (32; 32a; 32b), **characterized in that** the optical system comprises controllable beam displacement means (217, 219; 317, 319) which, via an actuator (219; 319), cause the light beams impinging upon the CCD sensor (32a; 32b) to be optionally displaced in plane-parallel fashion along the plane of its sensor surface so that image information which would drop into ineffective gaps between adjacent sensitive sensor surfaces of said CCD sensor impinge upon sensitive surfaces of said sensor.

**2.** Device according to claim 1, characterized in that the beam displacement means (217; 317) comprise at least one plane-parallel optical plate which is arranged at an inclination with respect to the direction of the raypath.

**3.** Device according to claim 2, characterized in that the displacement means (217; 317) comprise a plurality of plane-parallel plates which are inclined relative to the raypath at different angles and/or in different directions, one of said plates being optionally selectible by movement of said beam displacement means via the actuator (219; 319).

**4.** Device according to claim 3, characterized in that the beam displacement means (217, 317) are configured as a wheel which carries the plane-parallel plates in sections concentric relative to its axis of rotation and which is rotatable into desired rotary positions by means of the actuator (219, 319).

**Revendications**

**1.** Dispositif de conversion en signaux vidéo des signaux lumineux d'un objet plat situé sur un porte-objet (21, 21a, 21b) et qui s'étend essentiellement dans un plan-objet, au moyen d'un détecteur CCD (32, 32a, 32b) disposé au niveau d'un support et d'un dispositif optique comprenant un objectif (35, 35a, 35b), qui définit un trajet des rayons avec un axe optique (30, 30a, 30b) et qui peut être réglé pour la reproduction de l'objet sur le détecteur CCD (32, 32a, 32b)

**caractérisé en ce que** le dispositif optique présente un translateur de rayons (217, 219, 317, 319) orientable qui peut être amené en position, au moyen d'un mécanisme de commande (219, 319), pour une translation plan-parallèle possible des rayons lumineux qui arrivent sur le détecteur CCD (32a, 32b), le long du plan de sa surface de détection, de façon à ce que des informations d'image, qui tomberaient, en l'absence de translation des rayons lumineux, dans des interstices inactifs présents entre des surfaces de détection sensibles contiguës du détecteur CCD, atteignent des surfaces de détection sensibles du détecteur.

**2.** Dispositif selon la revendication 1, caractérisé en ce que le translateur de rayons (217, 317) présente au moins une plaque optique à faces planes et parallèles inclinée par rapport à la direction du trajet des rayons.

**3.** Dispositif selon la revendication 2, caractérisé en ce que le translateur de rayons (217, 317) présente plusieurs plaques à faces planes et parallèles inclinées à un angle différent et/ou dans un sens d'inclinaison différent par rapport à la direction du trajet des rayons, l'une quelconque de ces plaques pouvant être choisie à chaque fois par déplacement du translateur de rayons au moyen du mécanisme de commande (219, 319).

**4.** Dispositif selon la revendication 3, caractérisé en ce que le translateur de rayons (217, 317) est conçu comme une roue qui supporte les plaques à faces planes et parallèles dans des coupes situées concentriquement par rapport à son axe de rotation et qui peut être orientée dans les positions de rotation souhaitées au moyen du mécanisme de commande.

Fig. 1

Fig. 2

EP 0 635 968 B1

Fig. 3

Fig. 4

EP 0 635 968 B1